(19) Europäisches Patentamt / European Patent Office / Office européen des brevets

(11) **EP 2 869 085 B1**

(12) **FASCICULE DE BREVET EUROPEEN**

(45) Date de publication et mention
de la délivrance du brevet:
**12.07.2017 Bulletin 2017/28**

(51) Int Cl.:
*G01S 19/21* (2010.01)   *G01S 19/22* (2010.01)

(21) Numéro de dépôt: **14190296.5**

(22) Date de dépôt: **24.10.2014**

(54) **Procédé de détection d'interférences dans un signal de radio-navigation par satellite par detection d'une déformation de la fonction de corrélation**

Verfahren zur Erfassung von Interferenzen in einem Funk-Navigationssignal über Satellit, das auf der Erfassung einer Deformation der Korrelationsfunktion beruht

Method for detecting interference in a satellite radio-navigation signal by detecting a deformation of the correlation function

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2013 FR 1302521**

(43) Date de publication de la demande:
**06.05.2015 Bulletin 2015/19**

(73) Titulaire: **Thales**
**92400 Courbevoie (FR)**

(72) Inventeurs:
• **REVOL, Marc**
**26120 UPIE (FR)**
• **David PIETIN, David**
**33187 LE HAILLAN Cedex (FR)**

(74) Mandataire: **HAMMES, Pierre et al**
**Marks & Clerk France**
**Immeuble Visium**
**22, avenue Aristide Briand**
**94117 Arcueil Cedex (FR)**

(56) Documents cités:
**US-A- 5 828 694    US-A1- 2002 186 794**

• **FRANCO-PATINO DIEGO M ET AL: "Signal quality checks for multipath detection in GNSS", 2013 INTERNATIONAL CONFERENCE ON LOCALIZATION AND GNSS (ICL-GNSS), IEEE, 25 juin 2013 (2013-06-25), pages 1-6, XP032477997, ISSN: 2325-0747, DOI: 10.1109/ICL-GNSS.2013.6577268 ISBN: 978-1-4799-0484-6 [extrait le 2013-08-08]**
• **M ET AL: "Comparision of Multipath Mitigation Techniques with Consideration of Future Signal Structures", ION GPS/GNSS, XX, XX, 9 septembre 2003 (2003-09-09), pages 2584-2592, XP002412392,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne le domaine des systèmes de radio-navigation par satellite et plus précisément les récepteurs de signaux de radio-navigation par satellite.

L'invention porte sur un procédé de détection d'interférences dans un signal de radio-navigation par satellite reçu par un tel récepteur.

Lorsque le signal de radio-navigation est superposé à un signal interférant bande étroite, cela a pour effet d'engendrer des erreurs de mesure qui impactent les calculs de temps et de position effectués par le récepteur et in fine entrainent une erreur de positionnement.

Il est donc important de pouvoir détecter la présence d'interférence dans le signal de radio-navigation reçu afin de pouvoir apporter des traitements correctifs ou d'exclure les mesures effectuées en présence d'interférence.

Les solutions connues au problème précité sont basées sur la détection d'une mesure aberrante par rapport à une moyenne ou un écart attendu.

Ces solutions présentent l'inconvénient de nécessiter un temps de détection trop important entre l'instant ou l'interférence apparait et l'instant où elle est effectivement détectée.

On connait par ailleurs le document « Signal quality checks for multipath detection in GNSS », Franco-patino diego M et al., IEEE, 25 juin 2013 qui propose une méthode de détection de trajets multiples dans un signal GNSS.

L'invention propose un procédé de détection d'interférences basé sur l'évaluation de déformations de la fonction de corrélation du signal de radio-navigation.

Le procédé proposé présente notamment l'avantage de permettre une détection plus rapide pour des signaux d'interférence bande étroite.

A cet effet, l'invention a pour objet un procédé de détection d'interférences dans un signal de radio-navigation par satellite caractérisé en ce qu'il comporte les étapes suivantes :

- Calculer une information représentative de la pente de la fonction de corrélation dudit signal avec un code d'étalement local, ladite fonction de corrélation ayant sensiblement la forme théorique d'un triangle isocèle, ladite pente étant estimée sur l'un quelconque des cotés de même longueur dudit triangle isocèle,
- Comparer ladite information à un seuil de détection configuré au moins en fonction d'un rapport signal à bruit cible

Selon un aspect particulier de l'invention, ladite information représentative de la pente est calculée au moins à partir d'une première mesure du maximum de la fonction de corrélation à une première position temporelle, d'une deuxième mesure de la fonction de corrélation à une deuxième position temporelle en avance de la première position temporelle d'une durée inférieure à la durée d'un créneau du code d'étalement et d'une troisième mesure de la fonction de corrélation à une troisième position temporelle en retard de la première position temporelle d'une durée inférieure à la durée d'un créneau du code d'étalement.

Selon un aspect particulier de l'invention, le décalage temporel entre la première mesure et la deuxième mesure d'une part et entre la première mesure et la troisième mesure d'autre part sont sensiblement égaux en valeur absolue.

Selon un aspect particulier de l'invention, ladite information représentative de la pente est calculée à partir du ratio entre l'énergie de la première mesure et la somme des énergies respectives des deuxième et troisième mesures.

Selon un aspect particulier de l'invention, ladite information représentative de la pente est calculée à partir d'un nombre supérieur à trois, de mesures de la fonction de corrélation prises selon différentes abscisses temporelles, en effectuant une régression linéaire.

Selon un aspect particulier de l'invention, la dite information représentative de la pente est calculée au moins à partir dudit décalage temporel et de la longueur d'un créneau du code d'étalement.

Selon un aspect particulier de l'invention, ledit seuil de détection est configuré en fonction du rapport des puissances du signal et de l'interférence.

L'invention a également pour objet un dispositif de réception de signaux de radio-navigation par satellite comprenant des moyens configurés pour mettre en oeuvre le procédé de détection d'interférences selon l'invention.

D'autres caractéristiques et avantages de la présente invention apparaîtront mieux à la lecture de la description qui suit en relation aux dessins annexés qui représentent :

- La figure 1, un synoptique d'un dispositif de réception de signaux de radio-navigation adapté pour mettre en oeuvre le procédé selon l'invention,
- La figure 2a, un diagramme illustrant la forme théorique de la fonction de corrélation du signal avec un code d'étalement local en l'absence d'interférences,
- La figure 2b, un diagramme illustrant l'impact d'interférences bande étroite sur la forme de la fonction de corrélation,
- La figure 3, un organigramme décrivant les étapes de mise en oeuvre du procédé de détection d'interférences selon l'invention.

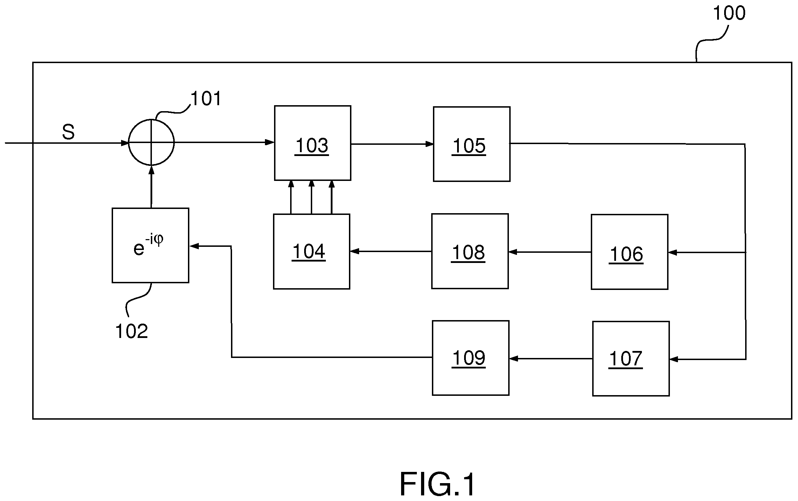

La figure 1 représente un synoptique d'un dispositif de réception de signaux de radio-navigation adapté pour mettre en oeuvre le procédé selon l'invention.

Un tel dispositif 100 est basé sur un récepteur de signaux de radio-navigation usuel qui comporte notamment les fonctionnalités suivantes. Le signal reçu S est démodulé en phase par l'intermédiaire d'un démodulateur 101 et d'une porteuse locale 102. Le signal S démodulé est ensuite transmis à un corrélateur 103 pour effectuer une corrélation du signal S avec un code d'étalement généré localement 104. Avantageusement, plusieurs corrélations sont réalisées avec des retards différents à chaque fois. Typiquement, trois corrélations peuvent être réalisées, l'une à un instant temporel donné, l'une en avance de cet instant et la dernière en retard de ce même instant.

Le résultat des corrélations est fourni à un module 105 de détection d'interférences selon l'invention qui exécute un procédé décrit plus loin dans le texte.

Le dispositif 100 comporte également un discriminateur de code 106 et un opérateur de contrôle numérique NCO 108 pour piloter la génération du code local, en particulier l'instant temporel auquel est réalisé la corrélation principale.

Le dispositif 100 peut comporter également un discriminateur de phase 107 et un opérateur de contrôle numérique NCO 109 pour piloter la génération de la porteuse locale 102, autrement dit la valeur du déphasage à imprimer au signal reçu S.

Le dispositif 100 selon l'invention peut comporter toute autre fonctionnalité habituellement implémentée dans un récepteur de signaux de radio-navigation par satellite. Les éléments décrits sur la figure 1 peuvent également être remplacés par toute autre fonction équivalente.

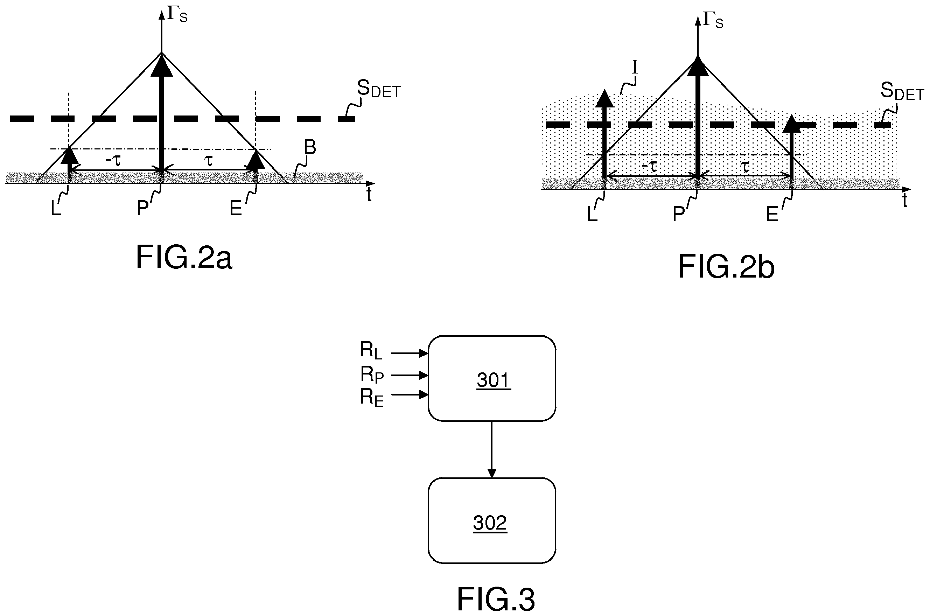

La figure 2a représente, sur un diagramme, l'allure de la fonction de corrélation du signal avec le code d'étalement généré localement, en fonction du retard appliqué. Sur la figure 2a sont représentés schématiquement trois points de corrélation. Le premier point P correspond à une corrélation du signal en phase avec le code d'étalement local, autrement dit qui donne la valeur maximale possible de la corrélation. Le deuxième point E correspond à une corrélation du signal avec le code d'étalement local avancé d'un décalage temporel T et le troisième point L correspond à une corrélation du signal avec le code d'étalement local retardé d'un décalage temporel T. Ces trois points de corrélation sont typiquement utilisés dans un récepteur de signaux de radio-navigation par satellite pour estimer le décalage temporel entre le signal reçu et l'horloge associé au code généré localement. Les décalages temporels avance et retard sont inférieurs à la durée d'un créneau du code d'étalement, plus connu sous l'acronyme anglo-saxon « chip ».

En l'absence d'interférence, la forme de la fonction de corrélation correspond sensiblement à un triangle isocèle en fonction du décalage temporel (avance ou retard) entre le code local et le signal reçu.

La figure 2b représente les trois points de corrélation précités lorsqu'un signal interférent I bande étroite est superposé au signal de radio-navigation par satellite.

Dans ce cas, l'influence du signal interférent peut être telle que les points de corrélation avance E et retard L sont augmentés et le point de corrélation en phase P est atténué. La forme de la fonction de corrélation est alors modifiée par rapport à sa forme théorique.

Le principe à la base de l'invention consiste à détecter une déformation de la fonction de corrélation par rapport à sa forme triangulaire théorique pour en déduire la présence d'interférences dans la bande du signal reçu.

Le procédé selon l'invention comprend, comme illustré sur l'organigramme de la figure 3, deux étapes principales.

Dans une première étape 301, on calcule, à partir des résultats de corrélation du signal reçu avec le code d'étalement généré localement, une estimée de la pente de la fonction de corrélation théorique sur l'un des deux cotés du triangle (tel que représenté à la figure 2a).

Pour calculer cette estimée $\gamma$, on peut utiliser la relation suivante :

$$\gamma = \frac{R_P.R_P^{\,*}}{R_E.R_E^{\,*} + R_L.R_L^{\,*}} ,$$

$R_P$ est le résultat de la corrélation principale, $R_P.R_P^*$ étant égal à l'énergie instantanée de ce résultat.

$R_E$ est le résultat de la corrélation avec un retard positif de valeur prédéterminée $\tau$, dite corrélation avance, $R_E.R_E^*$ étant égal à l'énergie instantanée de ce résultat.

$R_L$ est le résultat de la corrélation avec un retard négatif de valeur prédéterminée $-\tau$, dite corrélation retard, $R_L.R_L^*$ étant égal à l'énergie instantanée de ce résultat.

Avantageusement, les valeurs absolues du retard positif et du retard négatif peuvent être égales de sorte à ce que les corrélations avance et retard soient symétriques.

Ainsi, la valeur de l'indicateur $\gamma$ diminue lorsque la puissance du signal interférent est élevée.

Pour améliorer la précision de l'indicateur $\gamma$, les trois résultats de corrélation peuvent être moyennés sur une durée K donnée.

$$\gamma = \frac{\sum\limits_{k=0}^{K} R_P(kT).R_P^{\ *}(kT)}{\sum\limits_{k=0}^{K} R_E(kT).R_E^{\ *}(kT) + \sum\limits_{k=0}^{K} R_L(kT).R_L^{\ *}(kT)}$$

L'indicateur $\gamma$ peut encore être amélioré en intégrant un facteur de normalisation qui dépend du retard $\tau$ et de la durée $r_c$ d'un créneau du code d'étalement :

$$\gamma = \frac{2}{(1-\frac{\tau}{r_c})^2} \frac{\sum\limits_{k=0}^{K} R_P(kT).R_P^{\ *}(kT)}{\sum\limits_{k=0}^{K} R_E(kT).R_E^{\ *}(kT) + \sum\limits_{k=0}^{K} R_L(kT).R_L^{\ *}(kT)}$$

Dans une seconde étape 302, l'indicateur $\gamma$ est comparé à un seuil de détection d'interférences $S_{DET}$ configuré en fonction d'un rapport signal à bruit donné et d'un rapport des puissances entre le signal utile et le signal interférant. Si l'indicateur $\gamma$ est inférieur au seuil de détection $S_{DET}$ alors on conclut à la présence d'interférence.

L'homme du métier saura, sans difficultés, déduire des indicateurs décrits ci-dessus, d'autres indicateurs équivalents qui permettent d'estimer la pente de la fonction de corrélation ou une information caractéristique de cette pente.

En particulier, un nombre supérieur à 3 de points de corrélation peuvent être utilisés, avec plusieurs retards différents. La pente de la fonction de corrélation peut être estimée à partir de cette pluralité de résultats de corrélation en effectuant une régression linéaire.

De façon équivalente, il est également possible d'implémenter l'indicateur inverse $1/\gamma$ et d'en déduire la présence d'interférence lorsque cet indicateur inverse est supérieur à un seuil de détection.

Dans les différentes variantes de réalisation du dispositif 100 selon l'invention, les modules de calcul peuvent être agencés selon différentes architectures, en particulier chaque étape du procédé selon l'invention peut être implémentée par un module distinct ou au contraire les deux étapes peuvent être regroupées au sein d'un module de calcul unique.

Chacun des modules de calcul que comporte le dispositif selon l'invention peut être réalisé sous forme logicielle et/ou matérielle. Chaque module peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

**Revendications**

1.  Procédé de détection d'interférences dans un signal de radio-navigation par satellite **caractérisé en ce qu'**il comporte les étapes suivantes :

    • Calculer (301) une information représentative de la pente de la fonction de corrélation dudit signal avec un code d'étalement local, ladite fonction de corrélation ayant sensiblement la forme théorique d'un triangle isocèle, ladite pente étant estimée sur l'un quelconque des cotés de même longueur dudit triangle isocèle,
    • Comparer (302) ladite information à un seuil de détection configuré au moins en fonction d'un rapport signal à bruit cible

2.  Procédé de détection d'interférences selon la revendication 1 dans lequel ladite information représentative de la pente est calculée au moins à partir d'une première mesure du maximum de la fonction de corrélation à une première position temporelle, d'une deuxième mesure de la fonction de corrélation à une deuxième position temporelle en avance de la première position temporelle d'une durée inférieure à la durée d'un créneau du code d'étalement et d'une troisième mesure de la fonction de corrélation à une troisième position temporelle en retard de la première position temporelle d'une durée inférieure à la durée d'un créneau du code d'étalement.

3.  Procédé de détection d'interférences selon la revendication 2 dans lequel le décalage temporel entre la première mesure et la deuxième mesure d'une part et entre la première mesure et la troisième mesure d'autre part sont sensiblement égaux en valeur absolue.

4. Procédé de détection d'interférences selon la revendication 3 dans lequel ladite information représentative de la pente est calculée à partir du ratio entre l'énergie de la première mesure et la somme des énergies respectives des deuxième et troisième mesures.

5. Procédé de détection d'interférences selon l'une des revendications 2 à 4 dans lequel ladite information représentative de la pente est calculée à partir d'un nombre supérieur à trois, de mesures de la fonction de corrélation prises selon différentes abscisses temporelles, en effectuant une régression linéaire.

6. Procédé de détection d'interférences selon l'une des revendications précédentes dans lequel la dite information représentative de la pente est calculée au moins à partir dudit décalage temporel et de la longueur d'un créneau du code d'étalement.

7. Procédé de détection d'interférences selon l'une des revendications précédentes dans lequel ledit seuil de détection est configuré en fonction du rapport des puissances du signal et de l'interférence.

8. Dispositif (100) de réception de signaux de radio-navigation par satellite comprenant des moyens (105) configurés pour mettre en oeuvre le procédé de détection d'interférences selon l'une des revendications 1 à 7.

**Patentansprüche**

1. Verfahren zum Erkennen von Interferenzen in einem Satellitenfunknavigationssignal, **dadurch gekennzeichnet, dass** es die folgenden Schritte umfasst:

   • Berechnen (301) einer Information, die das Gefälle der Korrelationsfunktion des Signals repräsentiert, mit einem lokalen Spreizcode, wobei die Korrelationsfunktion im Wesentlichen die theoretische Form eines gleichschenkligen Dreiecks hat, wobei das Gefälle auf einer der Seiten von gleicher Länge des gleichschenkligen Dreiecks geschätzt wird;
   • Vergleichen (302) der Information mit einer Erkennungsschwelle, die mindestens in Abhängigkeit von einem Ziel-Signal/Rausch-Verhältnis konfiguriert ist.

2. Verfahren zum Erkennen von Interferenzen nach Anspruch 1, wobei die das Gefälle repräsentierende Information mindestens auf der Basis einer ersten Messung des Maximums der Korrelationsfunktion an einer ersten zeitlichen Position, einer zweiten Messung der Korrelationsfunktion an einer zweiten zeitlichen Position vor der ersten zeitlichen Position um eine Dauer, die kürzer ist als die Dauer eines Schlitzes des Spreizcodes, und einer dritten Messung der Korrelationsfunktion an einer dritten zeitlichen Position hinter der ersten zeitlichen Position um eine Dauer berechnet wird, die kürzer ist als die Dauer eines Schlitzes des Spreizcodes.

3. Verfahren zum Erkennen von Interferenzen nach Anspruch 2, wobei die zeitlichen Versätze zwischen der ersten Messung und der zweiten Messung einerseits und zwischen der ersten Messung und der dritten Messung andererseits im Wesentlichen nach absolutem Wert gleich sind.

4. Verfahren zum Erkennen von Interferenzen nach Anspruch 3, wobei die das Gefälle repräsentierende Information auf der Basis des Verhältnisses zwischen der Energie der ersten Messung und der Summe der jeweiligen Energien der zweiten und dritten Messung berechnet wird.

5. Verfahren zum Erkennen von Interferenzen nach einem der Ansprüche 2 bis 4, wobei die das Gefälle repräsentierende Information auf der Basis von mehr als drei Messungen der Korrelationsfunktion entlang verschiedenen zeitlichen Abszissen durch Ausführen einer linearen Regression berechnet wird.

6. Verfahren zum Erkennen von Interferenzen nach einem der vorherigen Ansprüche, wobei die das Gefälle repräsentierende Information mindestens auf der Basis des zeitlichen Versatzes und der Länge eines Schlitzes des Spreizcodes berechnet wird.

7. Verfahren zum Erkennen von Interferenzen nach einem der vorherigen Ansprüche, wobei die Erkennungsschwelle in Abhängigkeit vom Verhältnis der Signalleistungen und der Interferenz konfiguriert ist.

8. Vorrichtung (100) zum Empfangen von Satellitenfunknavigationssignalen, die Mittel (105) umfasst, konfiguriert zum Implementieren des Verfahrens zum Erkennen von Interferenzen nach einem der Ansprüche 1 bis 7.

**Claims**

1. A method for detecting interferences in a satellite radionavigation signal, **characterised in that** it comprises the following steps:

   • computing (301) an item of information representing the slope of the correlation function of said signal with a local spreader code, said correlation function substantially having the theoretical shape of an isosceles triangle, said slope being estimated on any one of the sides of equal length of said isosceles triangle;
   • comparing (302) said item of information to a detection threshold that is configured at least as a function of a target signal-to-noise ratio.

2. The method for detecting interferences according to claim 1, wherein said information representing the slope is computed at least on the basis of a first measurement of the maximum of the correlation function at a first temporal position, a second measurement of the correlation function at a second temporal position in advance of said first temporal position by a duration that is shorter than the duration of a slot of said spreader code, and a third measurement of the correlation function at a third temporal position behind said first temporal position by a duration shorter than the duration of a slot of said spreader code.

3. The method for detecting interferences according to claim 2, wherein the time lags between said first measurement and said second measurement, on the one hand, and between said first measurement and said third measurement, on the other hand, are substantially equal by absolute value.

4. The method for detecting interferences according to claim 3, wherein said item of information representing the slope is computed on the basis of the ratio between the power of said first measurement and the sum of the respective powers of said second and third measurements.

5. The method for detecting interferences according to any one of claims 2 to 4, wherein said item of information representing the slope is computed on the basis of more than three measurements of the correlation function, taken along various temporal abscissae, by carrying out a linear regression.

6. The method for detecting interferences according to any one of the preceding claims, wherein said item of information representing the slope is computed at least on the basis of said temporal lag and of the length of a slot of said spreader code.

7. The method for detecting interferences according to any one of the preceding claims, wherein said detection threshold is configured as a function of the signal powers-to-interference ratio.

8. A device (100) for receiving satellite radionavigation signals comprising means (105) configured to implement the method for detecting interferences according to any one of claims 1 to 7.

FIG.1

FIG.2a

FIG.2b

FIG.3

EP 2 869 085 B1